# EUROPEAN PATENT SPECIFICATION

(11) **EP 1 853 064 B1**
(45) Date of publication and mention of the grant of the patent: **28.09.2011**
(21) Application number: 06712584.9
(22) Date of filing: 30.01.2006
(51) Int. Cl.: H04N 5/76, H04N 7/173

(54) **PROGRAM RECORDING DEVICE, PROGRAM RECORDING METHOD, PROGRAM RECORDING PROGRAM, AND COMPUTER-READABLE RECORDING MEDIUM**
PROGRAMMAUFZEICHNUNGSANORDNUNG, PROGRAMMAUFZEICHNUNGSVERFAHREN, PROGRAMMAUFZEICHNUNGSPROGRAMM UND COMPUTERLESBARES MEDIUM
DISPOSITIF, PROCEDE ET PROGRAMME D'ENREGISTREMENT DE PROGRAMME, AINSI QUE SUPPORT D'ENREGISTREMENT INFORMATIQUE

(30) Priority: 31.01.2005 JP 2005024349
(43) Date of publication of application: 07.11.2007
(73) Proprietor: Pioneer Corporation, Kanagawa 212-0031 (JP)
(72) Inventor: KOGA, Koji c/o Pioneer Corporation, Tokyo, 1538654 (JP); SHIBASAKI, Hiroaki c/o Pioneer Corporation, Tokyo, 1538654 (JP); KITADA, Mari c/o Pioneer Corporation, Tokyo, 1538654 (JP); WATANABE, Shuuji c/o Pioneer Corporation, Tokyo, 1538654 (JP); MORIKAWA, Kiyoshi c/o Pioneer Corporation, Tokyo, 1538654 (JP)
(74) Representative: Haley, Stephen
(86) International application number: PCT/JP2006/301441
(87) International publication number: WO 2006/080492

(56) References cited:
- EP-A1- 1 487 204
- JP-A- 2005 020 395
- JP-A- 2005 020 395
- JP-A- 2005 156 168
- US-A1- 2002 157 096

## Description

The present invention relates to a program recording device, a program recording method, a program recording program, and a computer-readable recording medium.

Conventionally, there is a program recording device that records broadcasted programs. In such a program recording device, by specifying a broadcast date, a broadcast time, a broadcast channel, and the like in advance, the program can be automatically recorded. Furthermore, there is also a program recording device that can be programmed to record programs relating to a keyword by setting a certain keyword, without individually setting the broadcast dates, the broadcast times, the broadcast channels, and the like thereof (for example, Patent Document 1 below).
Patent document 1: Japanese Patent Laid-Open Publication No. 2004-193943

In the conventional program recording devices, however, there has been a problem, for example, that timer-recording cannot be performed without specifying the broadcast date, the broadcast time, the broadcast channel, or a keyword for programs wished to be recorded.

JP-A-2005/020395, US-A-2002/157096 and EP-A-1487204 all disclose recording devices and means for controlling such devices.

According to the present invention there is provided a television program recording device mounted on a vehicle, as described in claim 1.

The present invention also provides a corresponding recording method.
Fig. 1 is a block diagram illustrating one example of a functional configuration of a program recording device according to an embodiment of the present invention;
Fig. 2 is a flowchart for explaining processing performed by the program recording device according to the embodiment of the present invention;
Fig. 3 is a block diagram illustrating one example of a hardware configuration of a navigation device according to an example of the present invention;
Fig. 4 is a flowchart for explaining a processing performed at the time of creating a program timer-recording list;
Fig. 5 is a flowchart for explaining a processing performed at the time of program recording;
Fig. 6 is a flowchart for explaining another processing performed at the time of program recording;
Fig. 7 is a diagram for explaining an example of an EPG list;
Fig. 8 is a diagram for explaining one example of a destination/vicinity search history list;
Fig. 9 is a diagram for explaining one example of a category history list;
Fig. 10 is a diagram for explaining one example of a recording keyword list; and
Fig. 11 is a diagram for explaining one example of a program timer-recording list.

### EXPLANATIONS OF LETTERS OR NUMERALS

- 101: Route searching unit
- 102: Determining unit
- 103: Recording unit
- 104: Time-information acquiring unit
- 105: Weather-information acquiring unit
- 106: Detecting unit

### BEST MODE(S) FOR CARRYING OUT THE INVENTION

Exemplary embodiments of a program recording device, a program recording method, a program recording program, and a computer-recording medium according to the present invention are explained in detail below with reference to the accompanying drawings.

### (Embodiment)

### (Functional Configuration of Program Recording Device)

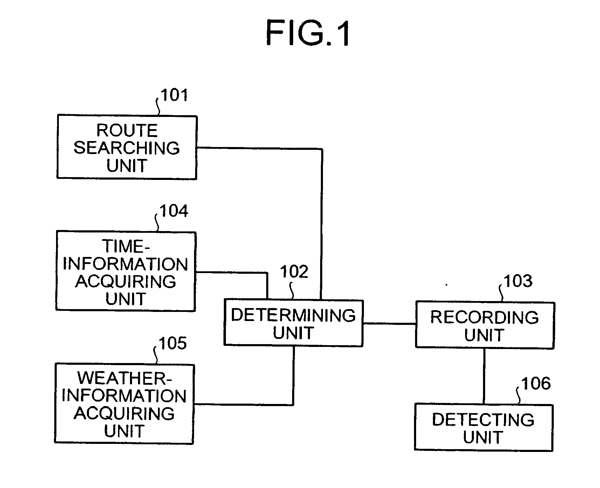

The program recording device according to the embodiments of the present invention is mounted on a mobile object having a mobile unit. The mobile object may be, for example, a vehicle (including four-wheel vehicles and two-wheel vehicles). For example, when the mobile object is a vehicle, the mobile unit is implemented by each unit and each function for the vehicle to travel. The mobile unit includes a battery that is mounted on the vehicle. Fig. 1 is a block diagram illustrating one example of a functional configuration of the program recording device according to an embodiment of the present invention. As shown in Fig. 1, the program recording device according to the embodiment includes a route searching unit 101, a determining unit 102, a recording unit 103, a time-information acquiring unit 104, a weather-information acquiring unit 105, and a detecting unit 106.

The route searching unit 101 searches for a route to a destination based on map information. When searching for a route, a route of high priority is searched for based on settings that are made in advance by a user or the like. For example, the setting that is made in advance includes designation that "the fastest route to the destination is searched for rather than the shortest route", "a route is searched for giving priority to ordinary roads (or toll roads)", "a route is searched for so as to pass roads having width of 6 m or more", and the like. The route searched for by the route searching unit 101 or information concerning the destination that is set at the route searching is stored by a storage unit, not shown, included in the program recording device.

The routes searched for by the route searching unit 101 include a route that is newly searched for during route guidance in addition to a route that is searched for before the route guidance begins. The search is re-performed when a transit point or a destination is intentionally changed by the user, in addition to when there is a traffic jam on the route. It is often the case that an intention of the user is reflected in the newly searched for route. For example, when a route passing along a coast is searched for after a route passing along mountains is searched for, it can be presumed that a preference for the route passing along a coast relative to the route passing along mountains is most likely reflected.

The determining unit 102 determines a program to be recorded based on information concerning the destination or information concerning the route searched for by the route searching unit 101. The determining unit 102 can be configured to determine the program to be recorded based on the information concerning the route and information acquired by the time-information acquiring unit 104. The determining unit 102 can be configured to determine the program to be recorded based on information concerning the route and information acquired by the weather-information acquiring unit 105. In the determining unit 102, it can be set in advance whether to consider the time information or the weather information at the determination of the program to be recorded. The determining unit 102 can be configured to extract a keyword from the information concerning the destination or the information concerning the route, and to determine the program to be recorded based on the extracted keyword.

The recording unit 103 records the program determined by the determining unit 102. The recording unit 103 records the program based on a remaining power of a battery that is detected by the detecting unit 106. More specifically, the recording unit 103 records the program when the battery has the remaining power that enables the program recording considering a recording time of the program to be recorded.

The time-information acquiring unit 104 acquires information concerning at least one of a date and time at which the route is searched for, and a date and time at which the mobile unit travels on the route. Hereinafter, in the present embodiment, the "information concerning at least one of date and time at which the route is searched for, and date and time at which the mobile unit travels on the route" is explained as the "time information". The time-information acquiring unit 104 can include a special storage unit that stores the date and time, for example, every time a route is searched for or every time the mobile unit travels on the route. In this case, the time-information acquiring unit 104 can acquire the time information from the special storage unit. Moreover, the time-information acquiring unit 104 can be configured to acquire the time information, for example, from information concerning a history of routes that are searched for by the route searching unit 101.

The weather-information acquiring unit 105 acquires information concerning weather when a route is searched for or information concerning weather when the mobile unit travels on the route. Hereinafter, in the present embodiment, the "information concerning weather when a route is searched for or information concerning weather when the mobile unit travels on the route" is explained as the "weather information". The weather-information acquiring unit 105 can include a special storage unit that stores information concerning the weather at the time, for example, a route search is performed or when the mobile unit travels on the route and can store the information every time either incident occurs. In this case, the weather-information acquiring unit 105 can acquire the weather information from the special storage unit. Moreover, the weather-information acquiring unit 105 can be configured to acquire information concerning the weather when a route is searched for by the route searching unit 101, or when the mobile unit travels on the route that is searched for by the route searching unit 101, appropriately from an external source.

The detecting unit 106 detects a remaining power level of a battery in the mobile unit. Specifically, for example, the detecting unit 106 detects voltage of the battery that is mounted on the vehicle. The detecting unit 106 can be configured to detect the remaining power of the battery by detecting whether the voltage of the battery is equal to or higher than a predetermined value.

### (Procedures of Processing by Program Recording Device)

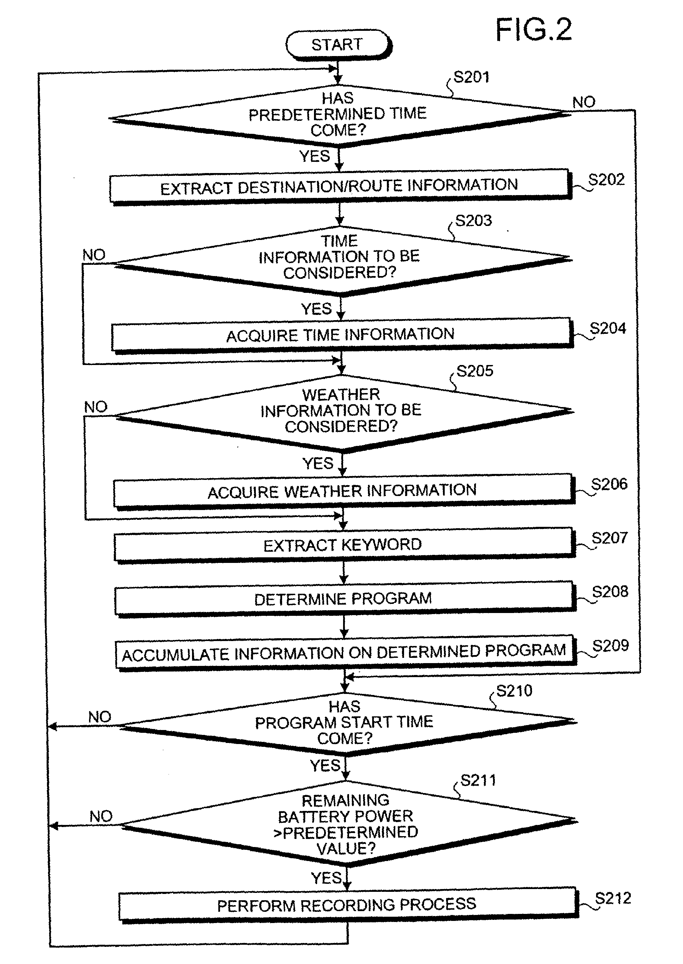

Next, processing by the program recording device according to the embodiments of the present invention is explained. Fig. 2 is a flowchart for explaining the processing by the program recording device according to the embodiments of the present invention. The processing shown in Fig. 2 is performed on a condition that the route search has previously been performed by the route searching unit 101. In the processing shown in Fig. 2, first, it is determined whether a predetermined time has come (step S201). The "predetermined time" can be, for example, a regular time such as 12 o'clock and 6 o'clock, a time that is set in advance by a user, or a time at which predetermined time period has passed since previous processing.

When it is determined that the predetermined time has come (step S201: YES), destination information or route information (shown as destination/route information in Fig. 2) is extracted (step S202). At step S202, information concerning destinations that have been set in the past including the current set, and on routes to the destinations that have been searched for by the route searching unit 101 is extracted. The information extracted at step S202 can be extracted from, for example, information that is stored in a storage unit that is included in the program recording device.

Next, it is determined whether to consider the time information (step 5203). The determination whether to consider the time information can be made based on setting in, for example, the determining unit 102. When it is determined to consider the time information (step S203: YES), the time information is acquired (step S204). The time information can be acquired, if the special storage unit is provided for storing the time information, from the storage unit. It can be configured to acquire the information from information concerning the history of routes that have been searched for by the route searching unit 101 without providing the special storage unit. When it is determined not to consider the time information (step S203: NO), the processing proceeds to step S205.

Subsequently, it is determined whether to consider the weather information (step S205). The determination whether to consider the weather information can be made based on a setting in, for example, the determining unit 102. When it is determined to consider the weather information (step S205: YES), the weather information is acquired (step S206). The weather information can be acquired, if the special storage unit is provided for storing the weather information, from the special storage unit. Moreover, it can be configured to acquire the information from an external source outside of the program recording device at the point of time when it is determined to consider the weather information, without providing the special storage unit. When it is determined not to consider the weather information (step S205: NO), the processing proceeds to step S207.

Thereafter, a keyword is extracted from the information concerning the destination or the information concerning the route that has been searched for by the route searching unit 101 (step S207). At step S207, if it has been determined to consider the time information at step S203, the keyword is extracted considering the time information.

Specifically, for example, when a specific date in December is acquired as the time information, a keyword relating to December such as "end of year" and "Christmas" is extracted as the keyword. At step S207, if it has been determined to consider the weather information at step S205, the keyword is extracted considering the weather information. Specifically, for example, when "snow" is acquired as the weather information, a keyword associated with snow such as "ski" and "Tohoku region" is extracted.

Next, a program to be recorded is determined based on the extracted keyword (step S208), and information concerning the determined program is accumulated (step S209). The "information concerning the program" that is accumulated at step S209 is, for example, information required to record the program such as a broadcast date, a broadcast time, and a broadcast channel. If it is not determined that the program start time has come (step S210: NO), the processing returns to step S201.

When it is determined that the program start time has come (step S210: YES), it is determined whether the remaining power of battery is greater than a predetermined value (step S211). In Fig. 2, the processing at step S211 is described as "battery remaining power>predetermined value?". When it is determined that the remaining power of the battery is greater than the predetermined value (step S211: YES), a recording process is performed (step S212). At step S212, the program that is identified by the information concerning the program accumulated at step S209 is recorded. When it is determined that the remaining power of the battery is less than the predetermined value (step S211: NO), the processing returns to step S201.

As described, according to the program recording device of the present embodiment, the program that is determined based on the information concerning the destination or the information concerning the route that has been searched for by the route searching unit 101 is recorded. Thus, it is possible to record a program that is related to activities of the user without requiring a complicated operation such as designation of a broadcast date, a broadcast time, and a broadcast channel, or a keyword in advance, thereby improving entertainment property to be provided to the user.

According to the program recording device of the present embodiment, at recording, a program to be recorded is determined based on information concerning at least one of a date and time at which a route is searched for and a date and time at which the mobile unit travels on the route. Thus, a program that is further related to the activities of the user and memories relating to the activities can be selected to be recorded, thereby improving entertainment property to be provided to the user.

Moreover, according to the program recording device of the present embodiment, at recording, a program to be recorded is determined based on information concerning weather at the time when a route is searched for or on weather at the time when a mobile unit travels on the route. Thus, it is possible to record a program that is further related to the activities of the user and memories relating to the activities can be recorded, thereby improving the entertainment property to be provided to the user.

At determining a program to be recorded, the program to be recorded is determined based on a keyword that is extracted from information concerning a destination or information concerning a route. Thus, a program that is directly related to the activities of the user and memories relating to the activities, such as a program having the keyword in the title thereof, can be recorded, thereby improving entertainment property to be provided to the user.

In addition, according to the program recording device of the present embodiment, a remaining power level of a battery is detected, and a program is recorded based on the detected remaining power level of the battery. Thus, it is possible to prevent cessation of recording in the middle of the program due to insufficient battery power.

### Example

### (Hardware Configuration of Navigation Device)

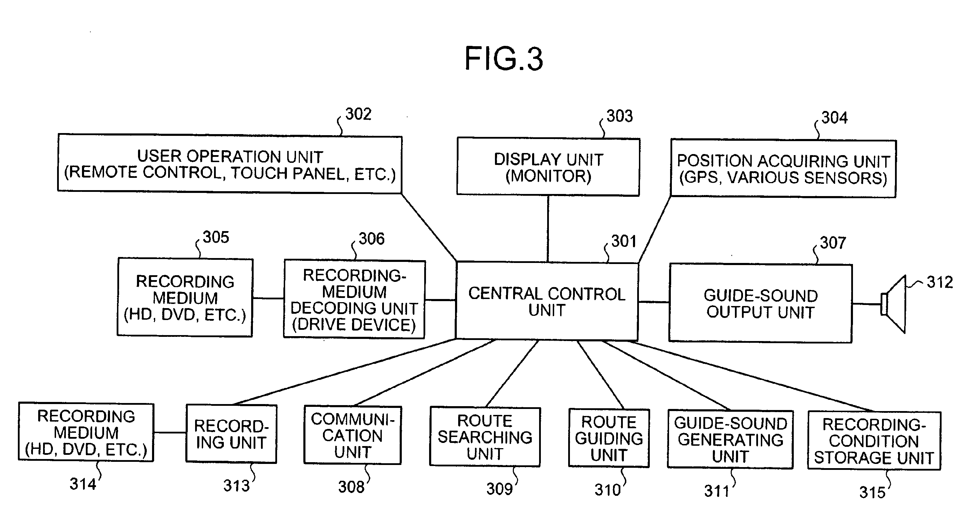

Next, a hardware configuration of a navigation device according to an example of the present invention is explained. The navigation device according to the present example is one example that implements the program recording device according to the present invention. Fig. 3 is a block diagram illustrating one example of the hardware configuration of the navigation device according to the example of the present invention.

The navigation device according to the example of the present invention shown in Fig. 3 is mounted on a vehicle. The navigation device includes a central control unit 301, a user operation unit 302, a display unit 303, a position acquiring unit 304, a recording medium 305, a recording-medium decoding unit 306, a guide-sound output unit 307, a communication unit 308, a route searching unit 309, a route guiding unit 310, a guide-sound generating unit 311, a speaker 312, a recording unit 313, a recording medium 314, and a recording-condition storage unit 315.

The central control unit 301 controls the entire navigation device. The central control unit 301 can be implemented by, for example, a microcomputer that is constituted of a CPU (central processing unit) that executes predetermined arithmetic processing, a ROM (read only memory) that stores various control programs, a RAM (random access memory) that functions as a work area of the CPU, and the like.

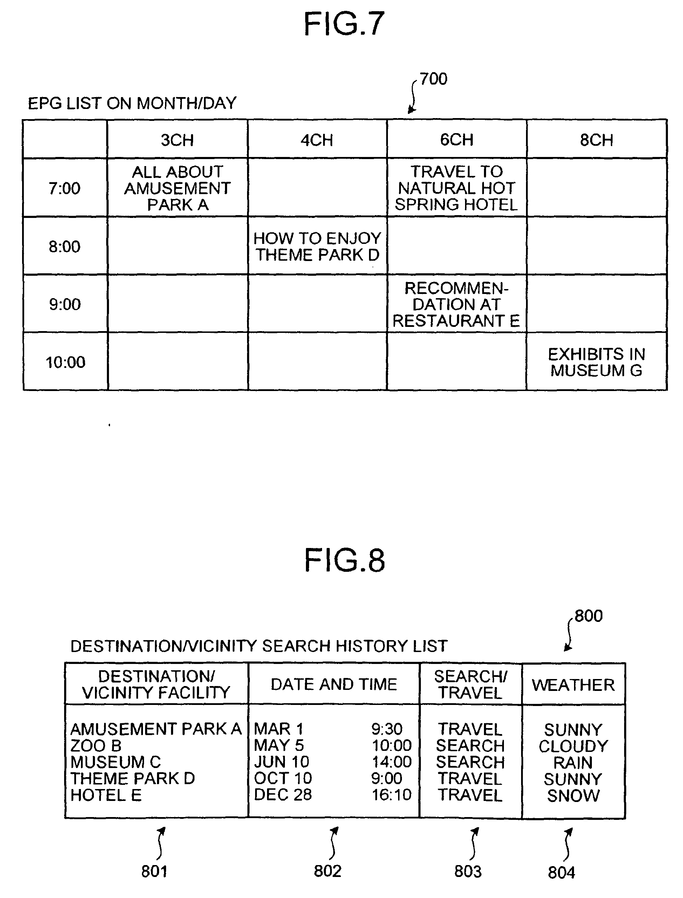

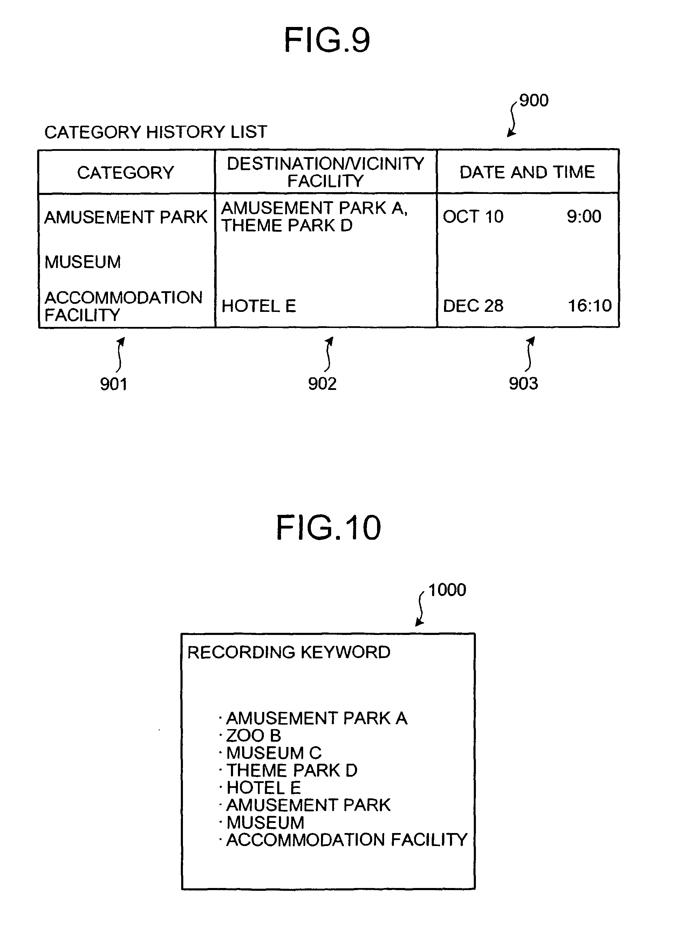

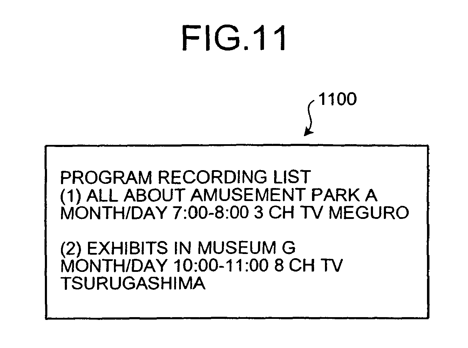

In the ROM or the RAM, a memory area is secured in which information that is obtained from an external source outside of the navigation device, such as an EPG list (see Fig. 7) is rewritably stored. Furthermore, in the ROM or the RAM, a memory area is secured in which a program recording list (see Fig. 11) is rewritably stored. Besides, in the ROM or the RAM, a memory area is secured in which a destination/vicinity search history list (see Fig. 8) and a category history list (see Fig. 9) are rewritably stored.

The central control unit 301, on route guidance by the route guiding unit 310, calculates a position on a map at which the vehicle is traveling based on information of a current position that is acquired by the position acquiring unit 304 and map information that is acquired from the recording medium 305 through the recording-medium decoding unit 306, and outputs a result of the calculation to the display unit 303. Moreover, the central control unit 301 communicates information concerning route guidance with the route searching unit 309, the route guiding unit 310, and the guide-sound generating unit 311, at performing the route guidance, and outputs to the display unit 303 and the guide-sound output unit 307 the information that is obtained as a result of the communication.

The user operation unit 302 outputs information, such as characters, numerical values, and various instructions, that is input by a user to the central control unit 301. As a configuration of the user operation unit 302, various conventional methods such as a push-button switch, a touch panel, a keyboard, and a joystick that detect physical force of pressing/not pressing can be adopted. The user operation unit 302 can be configured to be operated by voice input using a microphone that receives external sound.

The user operation unit 302 can be integrally provided in the navigation device or can take a form that enables operation from a unit separate from the navigation device such as a remote control. The user operation unit 302 can be configured in any one of the forms described above, or can be configured in more than one form. The user inputs information by performing input operation appropriately according to the configuration of the user operation unit 302. The information input by operating the user operation unit 302 includes, for example, destination. Specifically, for example, when the navigation device is mounted on a vehicle or the like, a point to which a person riding in the vehicle is heading is set.

For example, when a touch panel is employed as the form of the user operation unit 302, this touch panel is stacked on a display side of the display unit 303, to be used. In this case, input information is recognized by controlling display timing on the display unit 303, operating timing to the touch panel (user operation unit 302), and positional coordinates thereof. By employing a touch panel that is stacked on the display unit 303 as the user operation unit 302, it becomes possible to input a lot of information without increasing the size of the user operation unit 302. As a touch panel, various conventional touch panels such as a resistive touch panel and a pressure-sensitive touch panel can be used.

The display unit (monitor) 303 includes, for example, a CRT (cathode ray tube), a TFT liquid display, an organic EL display, a plasma display, and the like. The display unit 303 can be constituted of, for example, an image I/F and a display device for image display that is connected to the image I/F. Specifically, the image I/F is configured with, for example, a graphic controller that controls the entire display device, a buffer memory such as VRAM (video RAM) that temporarily stores image information that can be displayed immediately, and a control IC that controls display of the display device based on the image information output by the graphic controller. On the display unit 303, various kinds of information including an icon, a cursor, a menu, a window, a character, an image, and the like are displayed. Moreover, on the display unit 303, map information that is stored on an HD and information concerning route guidance, such as a route that has been searched for by the route searching unit 309 are displayed.

The position acquiring unit 304 acquires a current position of the device. The current position of the device is acquired by receiving a radio wave from a GPS satellite to measure the geometric position relative to the GPS satellite, and can be measured at any place on Earth. The GPS is an abbreviation of global positioning system, and is a system in which a position on the ground is accurately measured by receiving radio waves from at least four satellites. Since the GPS is a conventional technology, the explanation thereof is omitted. The position acquiring unit 304 can be configured by, for example, an antenna to receive the radio waves from the satellite, a tuner that demodulates the received radio waves, an arithmetic circuit that calculates a current position based on information acquired by demodulation, and the like.

As the radio wave from the GPS satellite, an L1 wave is used that is a carrier wave of 1.57542 GHz and on which a C/A (coarse and access) code and a navigation message are carried. With this wave, the current position (latitude and longitude) of the device is detected. At detection of the current position of the device, information collected by various sensors such as a vehicle speed sensor and a gyro sensor can be taken into consideration. The vehicle speed sensor detects from an output-side shaft of the transmission of the vehicle on which the navigation device is mounted.

Other than those, information collected from various sensors such as an angular speed sensor, an odometer, and an inclination sensor can be taken into consideration at acquisition of the current position of the device. The angular speed sensor detects an angular speed of the vehicle at turning, and outputs angular speed information and a relative bearing information. The odometer calculates the number of pulses per rotation of a wheel by counting the number of pulse signals having a predetermined cycle that are output according to rotation of the wheel, and outputs travel distance information based on the number of pulses per rotation. The inclination sensor detects an inclination angle of a road surface and outputs inclination angle information.

The recording medium 305 records various control programs in a computer-readable format and various kinds of information. The recording medium 305 accepts writing of information by the recording-medium decoding unit 306 and records the written information in a non-volatile manner. The recording medium 305 can be implemented, for example, by an HD (hard disk). The recording medium 305 is not limited to an HD, and instead of an HD, or in addition to an HD, a medium, such as a DVD (digital versatile disk) and a CD (compact disk), that is attachable and detachable to and from the recording-medium decoding unit 306 and is portable can be used as the recording medium 305. Furthermore, the recording medium 305 is not limited to a DVD or a CD, and a medium, such as a CD-ROM (CD-R, CD-RW), an MO (magneto-optical disk), and a memory card, that is attachable and detachable to and from the recording-medium decoding unit 306 and is portable can be used.

On the recording medium 305 according to the present example, a program recording program that implements the present invention, map information, and the like are recorded. The map information is used at in the search for a route by the route searching unit 309 and at route guidance by the route guiding unit 310. The map information includes background information that expresses features such as buildings, rivers, and ground surfaces, and road configuration information that expresses a configuration of roads. The map information is two-dimensionally or three-dimensionally illustrated on a display screen of the display unit 303.

The background information includes background configuration information that expresses a configuration of backgrounds and background type information that expresses a type of backgrounds. The background configuration information includes information expressing, for example, a representative point of a feature, a polyline, a polygon, coordinates of the feature, and the like. The background type information includes, for example, text information expressing name, address, and phone number of a building and the like, and type information expressing a type of a feature, such as building, river, and the like.

The road configuration information is information concerning a road network that has a plurality of nodes and links. The node is information that indicates an intersection at which a plurality of roads intersect, such as a junction of three streets, a crossroad, a junction of five streets, and the like. The link is information that indicates a road connecting between nodes. Some of the links include configuration complementary points that enable expression of a curved road. The road configuration information includes traffic condition information. The traffic condition information is information that indicates a characteristic of an intersection, length (distance) of each link, vehicle width, a traveling direction, passage prohibition, a road type, and the like.

As a characteristic of an intersection, for example, a complicated intersection such as a junction of three streets and a junction of five streets, an intersection that branches at a shallow angle, an intersection near the destination, an entrance and an exit or a junction of an expressway, such an intersection that a route deviation rate is high, and the like are indicated. The route deviation rate can be calculated from, for example, a past driving history. As a road type, for example, an expressway, a toll road, an ordinary road, and the like are indicated.

Although in the present example, the map information is recorded on the recording medium 305, it is not limited thereto. The map information is not limited to being recorded on a unit that is integrally provided in the hardware of the navigation device, and can be provided outside the navigation device. In this case, the navigation device acquires the map information, for example, through the communication unit 308 via a network. The acquired map information is stored in the RAM or the like.

The recording-medium decoding unit 306 controls reading/writing of information with respect to the recording medium 305. For example, when an HD is used as the recording medium 305, the recording-medium decoding unit 306 is an HDD (hard disk drive). Similarly, when a DVD or a CD (CD-R, CD-RW) is used as the recording medium 305, the recording-medium decoding unit 306 is a DVD drive or a CD drive. When a CD-ROM (CD-R, CD-RW), an MO, a memory card, or the like is used as the recording medium 305 that is writable and attachable/detachable, a special drive device that can write information to each type of the recording medium 305 and can read out information stored in each type of the recording medium 305 is appropriately used as the recording-medium decoding unit 306.

The guidance-sound output unit 307 reproduces a guidance sound by controlling output to the speaker 312 connected thereto. The speaker 312 can be one or more. Specifically, the guide-sound output unit 307 can be implemented by a sound I/F that is connected to the speaker 312 for sound output. More specifically, the sound I/F can be constituted of, for example, a D/A converter that performs D/A conversion on digital sound information, an amplifier that amplifies an analog sound signal that is output from the D/A converter, and an A/D converter that performs A/D conversion on analog sound information.

The communication unit 308 receives radio waves (television waves) that include an electrical signal of a television program that is modulated at a television station and that is transmitted on a high frequency carrier wave. Therefore, the communication unit 308 includes an antenna that can induce a large current by resonating with the frequency of the television waves, to receive the television waves. Moreover, the communication unit 308 includes a tuner to obtain a specific frequency of the television waves in the received radio waves. The television waves that are obtained by the tuner are separated into a carrier wave and an electrical signal again by sound detection and image detection. Since reception and transmission of the television waves and processing of the received television waves are conventional technologies, the explanation thereof is omitted.

For example, when the weather information is received from outside of the navigation device, the communication unit 308 can communicate with an external server or the like that stores various information, to acquire the weather information. The communication at acquiring the weather information can be achieved by a various radio communication techniques publicly known. Since the configuration and the communication technique at the acquisition of the weather information are conventional technologies, the explanation thereof is omitted in the present example.

The communication unit 308 can regularly (or irregularly) receive road traffic information including information concerning traffic congestion and traffic controls. The reception of the road traffic information by the communication unit 308 can be performed when road traffic information is distributed from a VICS (vehicle information and communication system) center, or can be performed by periodically requesting the VICS center for road traffic information. The communication unit 308 can be implemented as an FM tuner, a VICS/beacon receiver, and other communication devices. The received road traffic information is used for re-searching for a route that is being guided.

Although detailed explanation is omitted since the technology is conventional, "VICS" is an information communication system that transmits, in real time, road traffic information including information concerning traffic jams and traffic controls that is edited and processed in the VICS center, to express in characters and graphics on the navigation device and the like. The method of transmitting the road traffic information (VICS information) that is edited and processed at the VICS center to the car navigation device includes a method using a "beacon" and "FM multiplex broadcasting" provided on each road. The "beacon" includes a "radio wave beacon" that is mainly used on an expressway and an "optical beacon" that is used on major ordinary roads. When "FM multiplex broadcasting" is used, reception of road traffic information of a wide area is possible. When the "beacon" is used, reception of road traffic information that is necessary at a place at which the vehicle is positioned, such as detailed information concerning the nearest road relative to the position of the vehicle.

The route searching unit 309 calculates an optimal route from the current position to the destination based on a current position that is acquired by the position acquiring unit 304, the destination that is input by a user, and the map information that is acquired from the recording medium 305 through the recording-medium decoding unit 306. In the present example, the calculation of an optimal route from the current position to the destination that is performed by the route searching unit 309 is explained as searching for a route or route search.

The route searched for by the route searching unit 309 includes a route that is obtained as a result of re-searching for a route during route guidance by the route guiding unit 310, in addition to a route that is searched for before the start of the route guidance by the route guiding unit 310. Re-searching for a route is performed when a transit point or the destination is intentionally changed by the user and the like, as well as when a traffic jam occurs on the route that is being guided. It is often the case that intention of the user is reflected in the researched for route.

For example, when a route passing along a coast is searched for after a route passing along mountains has already been searched for, it can be presumed that a preference for the route passing along a coast relative to the route passing along mountains is most likely reflected. The route that is searched for by the route searching unit 309 or information concerning the destination that is set at the route searching can be stored in a storage unit, not shown, such as a ROM and a RAM, that is provided in the navigation device.

The route guiding unit 310 generates real time route guiding information based on the information concerning the route that is searched for by the route searching unit 309, or the road traffic information that is received by the communication unit 308, the information concerning the current position that is acquired by the position acquiring unit 304, and the map information that is acquired from the recording medium 305 through the recording-medium decoding unit 306. The route guiding information that is generated by the route guiding unit 310 is output to the display unit 303 through the central control unit 301.

The guidance-sound generating unit 311 generates information of tone and sound corresponding to patterns. Specifically, the guidance-sound generating unit 311 performs setting of a virtual sound source corresponding to the guiding point and generation of the sound guidance information based on the route guiding information that is generated by the route guiding unit 310, to output to the guide-sound output unit 307 through the central control unit 301.

The recording unit 313 records on the recording medium 314 a television program that is received by the communication unit 308. When an HD is used as the recording medium 314, the recording unit 313 is an HD recorder. When a DVD is used as the recording medium 314, the recording unit 313 is a DVD recorder. Since it is a conventional technology, explanation of the configurations of the HD recorder and the DVD recorder, and the mechanisms of timer-recording of a television program by the HD recorder and the DVD recorder is omitted.

On the recording medium 314, the television program that is received by the communication unit 308 is recorded by the recording unit 313. The recording medium 314 stores information concerning the television program that is recorded by the recording unit 313 in a non-volatile manner. At recording, image and sound information is recorded. The recording medium 314 is not limited to a disk medium such as an HD and a DVD, and, for example, a semiconductor memory such as a flash memory and other various media can be used.

The recoding-condition storage unit 315 stores various conditions that are set at timer-recording. The various conditions that are set at timer-recording include, for example, "whether the time information and the weather information are considered when extracting a keyword used to determine a program to be recorded". The time information is information concerning at least a date and time at which a route is searched for by the route searching unit 309. Furthermore, the time information is information concerning at least a date and time at which the route that has been searched for by the route searching unit 309 is traveled by the mobile unit.

The weather information is information concerning weather when the route is searched for by the route searching unit 309. Moreover, the weather information is information concerning the weather when the route that has been searched for by the route searching unit 309 is traveled by the mobile unit. Special storage units to store the time information and the weather information can be provided, and the time information and the weather information can be stored in the special storage units. The time information and the weather information can be appropriately acquired from an external server or the like as necessary for extracting a keyword, which is used to determine a program to be recorded. In the recording-condition storage unit 315, as various conditions that are set at timer-recording, for example, a recording mode such as a standard recording mode and an extended-time recording mode is set.

### (Procedure of Processing by Navigation Device)

Next, procedures of processing by the navigation device according to the example of the present invention are explained. The processing of the navigation device according to the example of the present invention is achieved by appropriately executing each process of creating the program timer-recording list and the program recording.

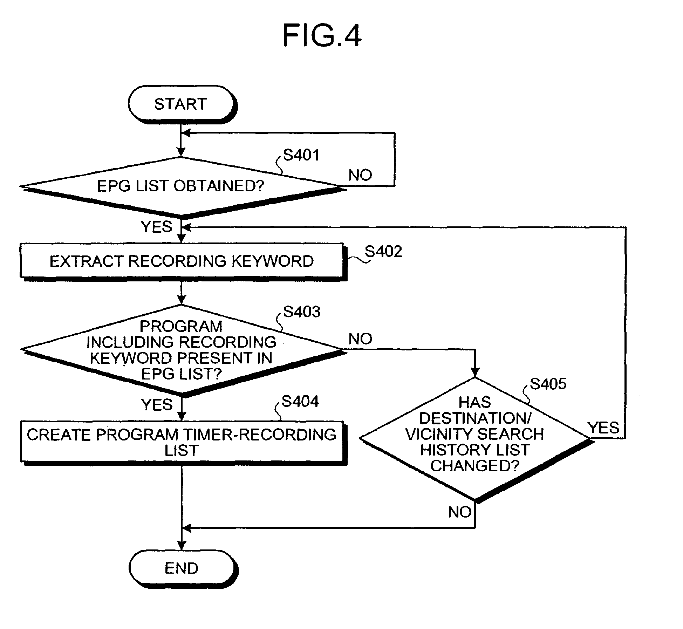

Fig. 4 is a flowchart for explaining procedures of processing that is performed at creating the program timer-recording list. In the processing shown in Fig. 4, the process remains in standby until it is determined that an EPG list has been obtained (step S401: NO). The EPG list is transmitted periodically using a radio wave between transmission frequency bands and the EPG list is obtained only when the EPG list is transmitted. When it is determined that the EPG list is obtained (step S401: YES), a recording keyword is extracted (step S402). In the present example, the keyword of the present invention is implemented by the recording keyword extracted at step S402.

At extraction of the recording keyword at step S402, a recording keyword is extracted from the destination/vicinity search history list (see Fig. 8) and the category history list (see Fig. 9). For example, if route is being guided, the destination of the route being guided is extracted as a keyword. Moreover, at extraction of the recording keyword at step S402, as necessary, the time information and the weather information are considered based on the information that is stored in the recording-condition storage unit 315.

For example, when a condition that "the time information is considered" is stored in the recording-condition storage unit 315, a recording keyword considering the time information is extracted. Specifically, for example, from information that is listed on the destination/vicinity search history list and the category history list, information in which the destination and date and time of search for the destination or of travel to the destination are associated is extracted as the recording keyword.

Similarly, when a condition that "the weather information is considered" is stored in the recording-condition storage unit 315, a recording keyword considering the weather information is extracted. Specifically, for example, from information that is listed on the destination/vicinity search history list and the category history list, information in which the destination and weather at the time of search for the destination or at the time of travel to the destination are associated is extracted as the recording keyword.

Next, it is determined whether a program that includes the extracted recording keyword is present in the EPG list (step S403). When it is determined that a program that includes the recording keyword is present in the EPG list (step S403: YES), the program timer-recording list is created (step S404).

When it is determined that a program that includes the recording keyword is not present in the EPG list (step S403: NO), it is determined whether the destination/vicinity search history list has changed (step S405). When it is determined that the destination/vicinity search history list has changed (step S405: YES), the processing proceeds to step S402. When it is determined that the destination/vicinity search history list has not changed (step S405: NO), the processing is terminated.

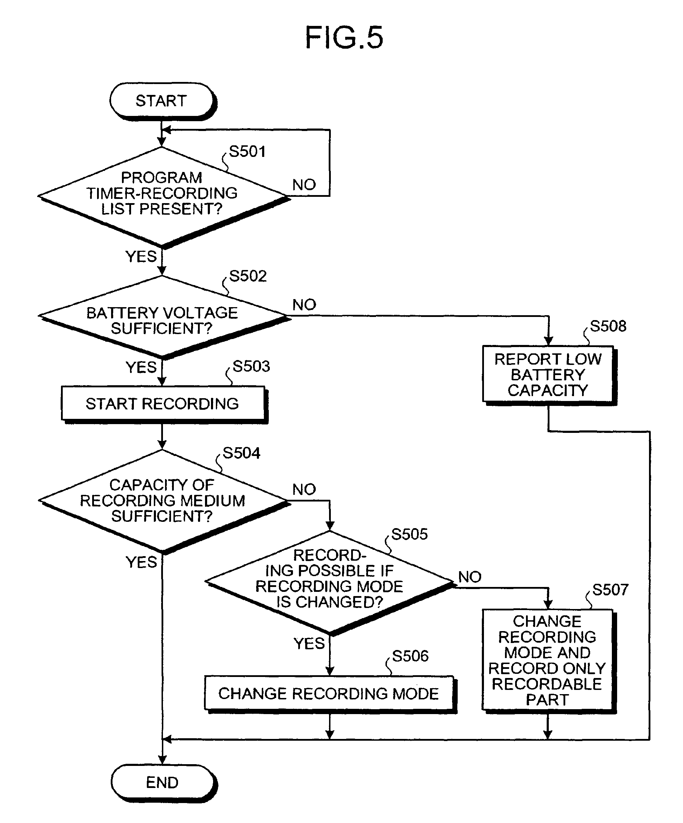

Fig. 5 is a flowchart for explaining procedures of processing performed at the program recording. In the processing shown in Fig. 5, first, it is determined whether the program timer-recording list is present (step S501) . When it is determined that the program timer-recording list is present (step S501: YES), it is determined whether the battery has sufficient voltage (step S502). At step S502, whether the battery has sufficient voltage for recording is determined by detecting a voltage of the battery, and by determining whether the detected voltage is equal to or higher than a predetermined value. When the detected voltage is lower than the threshold, it is determined that the battery has insufficient voltage (step S502: NO).

When it is determined that the battery has sufficient voltage (step S502: YES), recording of the program is started when a broadcast time of the program for which recording is programmed has come, based on the program timer-recording list (step S503). An available capacity of the recording medium 314 is monitored during the recording of the program, and it is determined whether the available capacity of the recording medium 314 is sufficient (step S504). When it is determined that the available capacity of the recording medium 314 is sufficient (step S504: YES), the recording of the program is continued until the program ends, and the processing is finished. On the other hand, when it is determined that the available capacity of the recording medium 314 is not sufficient (step S504: NO), it is determined whether the recording of the program is possible if the recording mode is changed (step S505). "Recording of the program is possible" indicates a state in which a complete recording of a program for which recording is programmed is possible.

A change of the recording mode indicates a change from the standard recording mode in which priority is given to image quality to an extended-time recording mode in which priority is given to extension of the recording time, for example, a change from the standard recording mode to the extended-time recording mode. When it is determined that the program recording is possible if the recording mode is changed (step S505: YES), the recording mode is changed to the extended-time recording mode (step S506), and the program recording continues until the program ends, and the processing ends. When it is determined that even if the recording mode is changed, the program recording is impossible (step S505: NO), the recording mode is changed to the extended-time recording mode, and the recording is performed only for a possible part of the program (step S507), and the processing ends.

When it is determined that the battery does not have sufficient voltage at step S502 (step S502: NO), a report indicating that the battery capacity is low is made (step S508). The report at step S508 can be made by transmitting a message indicating that the battery capacity is low to, for example, an address of a mobile telephone of a user that is set in advance. With this arrangement, it is possible to certainly notify the user that the battery capacity is low. Other than this method, the report at step S508 can also be made by, for example, a beeper that generates alarm sound according to an instruction from the navigation device.

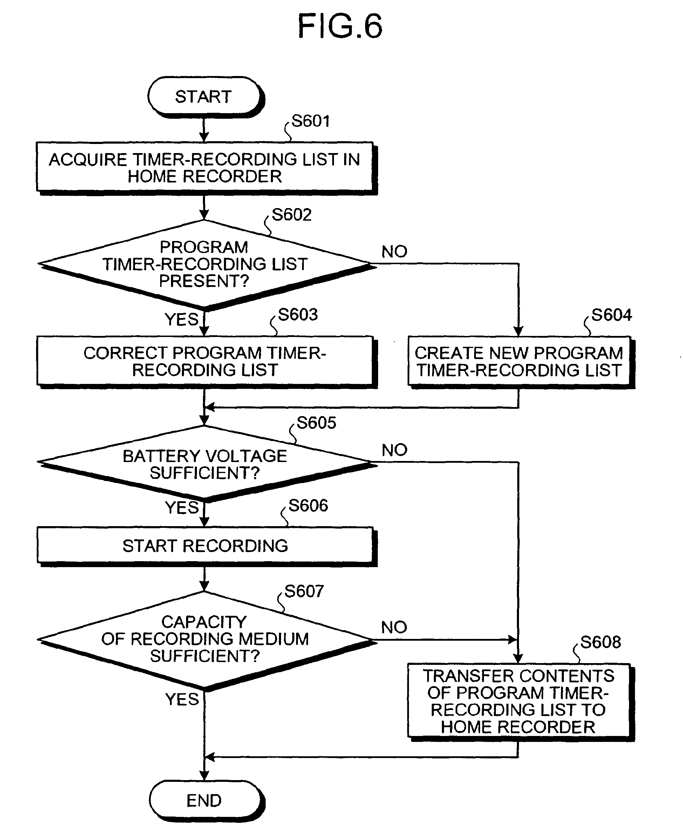

At program recording, processing shown in Fig. 6 can be performed in addition to the processing shown in Fig. 5. Fig. 6 is a flowchart for explaining different procedures of processing performed at the program recording. In the processing shown in Fig. 6, first, information concerning a timer-recording list and a history of a home recorder is obtained (step S601). At step S601, the "information concerning a timer-recording list and a history" is described as "timer-recording list/history information". The information concerning a timer-recording list is information concerning the contents of a timer-recording that is currently set in the recorder at home. The information concerning a history is information concerning programs that have been recorded in the past with the recorder at home. The information concerning a history is not necessarily information concerning all past histories, but can be information concerning a history dated back for a predetermined time from the present time. The recorder at home includes an HDD recorder.

Next, it is determined whether a program timer-recording list is present (step 5602). When it is determined that the program timer-recording list is present (step S602: YES), the program timer-recording list is corrected so as to add the information concerning a timer-recording list and history of the recorder at home (step S603). On the other hand, when it is determined that the program timer-recording list is not present (step S602: NO), a program timer-recording list is newly created based on the information concerning a timer-recording list and a history of the recorder at home (step S604).

Subsequently, it is determined whether the battery has sufficient voltage (step S605). At step S605, whether the battery has sufficient voltage is determined in a similar manner as step S502. When it is determined that the battery has sufficient voltage (step S605: YES), program recording begins when a broadcast time of a program that is programmed to be recorded has come, based on the program timer-recording list that is corrected to add information or newly created at step S603 or step S604 (step S606). An available capacity of the recording medium 314 is monitored during the recording of the program, and it is determined whether the available capacity of the recording medium 314 is sufficient (step S607). When it is determined that the available capacity of the recording medium 314 is sufficient (step S607: YES), the recording of the program continues until the program ends, and the processing ends.

On the other hand, when it is determined that the available capacity of the recording medium 314 is not sufficient (step S607: NO), or when it is determined that the battery does not have sufficient voltage (step S605: NO), contents of the program timer-recording list are transferred to the home recorder (step S608). The home recorder records a program that is scheduled to be recorded based on the data that is transferred from the navigation device. Since the home recorder and the program recording processing of the home recorder are conventional technologies, the explanation thereof is omitted.

Fig. 7 is a diagram for explaining one example of the EPG list. EPG (electronic program guide) is a system that displays a program listing on a screen of a television. An EPG list 700 illustrates a display that is displayed on a screen of a television based on data of programs that is transmitted, using this EPG. Although the explanation is omitted since it is a conventional technology, a difference between EPG and an ordinary television program is that a layout thereof is set on a receiver side. The EPG list 700 differs depending on a television that receives the radio wave (or setting in the television). Fig. 7 illustrates the EPG list 700 that displays scheduled broadcasted programs of one day in sections in a table-form according to broadcast times and broadcast channels as a television schedule in a newspaper. As shown in Fig. 7, for example, a program titled "all about amusement park A" is scheduled to be broadcast on channel 3 from 7 o'clock on date of month/day.

Fig. 8 is a diagram for explaining one example of the destination/vicinity search history list. In a destination/vicinity search history list 800, information concerning places that have been set as a destination or facilities that are obtained as a result of search for information around the places set as a destination is listed. Numeral 801 shown in Fig. 8 denotes an area in which places set as a destination or names of facilities and the like that are obtained as a result of a search for information around the places set as a destination are listed. Numeral 802 denotes an area in which dates on which the places or the facilities listed in the area 801 are set as a destination or dates of travel to the destination are listed. A period for which the information listed in Fig. 8 is obtained can be set to an arbitrary period such as a last one month and last half year. This arbitrary period can be appropriately set by a user by operating the user operation unit 302, or can be set in advance.

Numeral 803 denotes an area in which a performed action is discriminated either as a route search for the places or the facilities listed in the area 801, or travel to the places or the facilities listed in the area 801. Numeral 804 denotes an area in which weather on the day of setting the places or the facilities listed in the area 801 as a destination, or on the day of travel to the destination is stored. Respective pieces of information in the areas 801 to 804 are stored corresponding to each other. In the example shown in Fig. 8, the information listed in the area 802 is used as the time information. Moreover, in the destination/vicinity search history list 800, the information listed in the area 804 is used as the weather information.

Fig. 9 is a diagram for explaining one example of the category history list. In a category history list 900, the places or the facilities listed in the area 801 in Fig. 8 are classified into categories such as amusement park, museum, and accommodation facility. Numeral 901 denotes an area in which categories are listed. Numeral 902 denotes an area in which destinations or facilities around a destination that are classified into categories are listed. Numeral 903 denotes an area in which a date and time of search for the destinations classified into categories or a date and time of travel to the destinations are listed. In the category history list 900, "amusement park A" and "theme park D" are both classified into the same category. Information listed in the area 903 indicates the latest date and time among dates and times on which the places or the facilities are set as a destination or on which a search for information therearound is performed.

Fig. 10 is a diagram for explaining one example of the recording keyword. In a recording keyword list 1000, information concerning a destination or on a searched for route and keywords that are extracted from the information concerning the destination or on the searched for route are listed. For example, if "amusement park A", "zoo B", "museum C", "theme park D", and "hotel E" are listed in the destination/vicinity search history list 800 and "amusement park", "museum", and "accommodation facility" are listed in the category history list 900, "amusement park A", "zoo B", "museum C", "amusement park", "museum", and "accommodation facility" are listed in the keyword list 1000.

Fig. 11 is a diagram for explaining one example of the program timer-recording list. In a program timer-recording list 1100, information concerning programs that includes the recording keywords listed in the recording keyword list 1000 is listed. The program information recorded on the program timer-recording list 1100 is information that is extracted from the EPG list 700. From Fig. 11, it is understood that a program titled "all about amusement park A" is programmed to be recorded based on the recording keyword "amusement park A" in the recording keyword list 1000 shown in Fig. 10. Furthermore, as shown in Fig. 11, a program titled "exhibits in museum G" is programmed to be recorded based on the recording keyword "museum" in the program timer-recording list 1100. The program information in the program timer-recording list includes information concerning a broadcast start time, a broadcast end time, a broadcast channel, a broadcast television station, and the like, as well as title of the program.

If the time information is to taken into consideration at determining a program to be recorded, another recording keyword list is created. Although not specifically shown, for example, if the time information to be considered is "fall", at step S402 in Fig. 4, "theme park D" is extracted that has date of setting as the destination or of route search corresponding to fall, from the destination/vicinity search history list 800. Further, when the recording keyword "theme park D" is extracted at step S402 in Fig. 4, a program timer-recording list is created so that a program titled "how to enjoy theme park D" is programmed to be recorded based on the EPG list 700 at step S404 in Fig. 4.

If the weather information is to be taken into consideration in determining a program to be recorded, a recording keyword list different from the one shown in Fig. 10 is created. Although not specifically shown, for example, if the weather information to be considered is "snow", at step S402 in Fig. 4, "hotel E" is extracted which corresponds to the destination for which setting as the destination or route search therefor is performed on a day of snowy weather, from the destination/vicinity search history list 800. Further, when the recording keyword "hotel E" is extracted at step S402 in Fig. 4, a program timer-recording list is created so that a program titled "trip to natural hot spring hotel" is programmed to be recorded based on the EPG list 700 at step S404 in Fig. 4.

As described above, according to the navigation device according to the present example, a program that is determined based on information concerning a route to a destination that is searched for based on information concerning the destination or on map information is recorded. Therefore, a program that is related to activities of a user can be selectively recorded without requiring an operation for timer-recording by the user. This enables the user to collect information of interest or information relating to an interest without requiring a special operation. Thus, according to the navigation device of the present example, it is possible to improve the entertainment property to be provided to users.

When a program to be recorded is determined based on information concerning a destination or on a route, and information concerning at least a date and time at which the route is searched for or a date and time at which a mobile unit travels on the route, a program that is related to the date and time at which the route search or the travel is performed by the user can be selectively recorded.

When a program to be recorded is determined based on information concerning a destination or on a route, and information concerning weather of the day on which the route is searched for or on which a mobile unit travels on the route, a program that is related to the weather on the day of the route search or the travel by the user can be selectively recorded.

When a program to be recorded is determined based on a recording keyword (keyword of the present invention) that is extracted from information concerning a destination or on a route, a program that is further directly related to activities of a user can be recorded.

Thus, it is possible to record a program that is further deeply related to activities of a user or memories relating to the activities. This enables a user to collect information that is further closely related to activities of the user. As described, according to the navigation device of the present example, it is possible to improve the entertainment property to be provided to the user.

In addition, according to the navigation device of the present example, a program is recorded according to a remaining power level of a battery in a mobile unit. This enables prevention of a cessation of recording in the middle of the program.

A program recording method achieved by the navigation device explained in the present example is implemented by the execution of a program recording program that is prepared in advance, by a computer such as a personal computer and a workstation. Although in the present example, the program recording program is recorded on an HD as a recording medium, it is not limited such configuration. The program recording program is only required to be computer-readably recorded on a computer-readable recording medium, such as a flexible disk, a CD-ROM, an MO, or a DVD. Consequently, the program recording program recorded on a recording medium can be executed by being reading out from the recording medium by a computer. The program recording program is not limited to that recorded on a recording medium, and can be a transmission medium that can be distributed through a network such as the Internet.

## Claims

1. A television program recording device mounted on a vehicle **characterised by** comprising:
a route searching unit (101) that searches for a route to be followed by the vehicle to a given destination based on map information;
a memory adapted to store an Electronic Program Guide (EPG) list;
a determining unit (102) that determines a television program to be recorded based on information transmitted from the route searching unit to the determining unit, the information concerning the destination or concerning the route that is searched for by the route searching unit and an information contained in the stored Electronic Program Guide (EPG) list;
a communication unit (308) that receives television signals that include the determined television program; and
a recording unit (103) that records the determined television program.

2. The television program recording device according to claim 1, further comprising:
a time-information acquiring unit (104) that acquires information concerning at least one of date and time at which the route is searched for or at which a mobile unit travels on the route, wherein the determining unit (102) determines the television program to be recorded based on the information concerning the destination or the information concerning the route, and the information that is acquired by the time-information acquiring unit.

3. The television program recording device according to claim 1, further comprising:
a weather-information acquiring unit (105) that acquires information concerning weather at a time when the route is searched for or when a vehicle travels on the route, wherein the determining unit (102) determines the television program to be recorded based on the information concerning the destination or the information concerning the route, and the information that is acquired by the weather-information acquiring unit.

4. The television program recording device according to claim 1, wherein the determining unit (102) extracts a keyword from the information concerning the destination or the information concerning the route, and determines the television program to be recorded based on the extracted keyword.

5. The television program recording device according to any one of claims 1 to 4, further comprising:
a detecting unit (106) that detects a remaining power of a battery in the mobile unit, wherein the recording unit (103) records the television program based on the remaining power of the battery that is detected by the detecting unit.

6. A television program recording method carried out in a vehicle, **characterised by** comprising the steps of:
receiving and storing an Electronic Program Guide (EPG) list;
searching for a route to be followed by the vehicle to a given destination based on map information; determining a television program to be recorded based on information concerning the destination or information concerning the route that is searched for at the searching and an information contained in the stored Electronic Program Guide (EPG) list;
receiving television signals including the determined television program; and
recording the determined television program.

## Patentansprüche

1. Fernsehprogrammaufzeichnungseinrichtung, in einem Fahrzeug montiert, **dadurch gekennzeichnet, dass** sie Folgendes umfasst:
eine Routensucheinheit (101), die auf der Basis von Karteninformationen eine von dem Fahrzeug zu einem gegebenen Ziel zu verfolgende Route sucht,
einen Speicher, der zum Speichern einer Liste eines Elektronischen Programmführers (EPG) ausgelegt ist;
eine Bestimmungseinheit (102), die ein aufzuzeichnendes Fernsehprogramm auf der Basis von von der Routensucheinheit zu der Bestimmungseinheit übertragenen Informationen, wobei die Informationen das Ziel betreffen oder die Route betreffen, das oder die von der Routensucheinheit gesucht wird, und von in der Liste eines Elektronischen Programmführers (EPG) enthaltenen Informationen bestimmt;
eine Kommunikationseinheit (308), die Fernsehsignale empfängt, die das bestimmte Fernsehprogramm enthalten; und
eine Aufzeichnungseinheit (103), die das bestimmte Fernsehprogramm aufzeichnet.

2. Fernsehprogrammaufzeichnungseinrichtung nach Anspruch 1, die weiterhin Folgendes umfasst:
eine Zeitinformationserfassungseinheit (104), die Informationen hinsichtlich Datum und/oder Zeit erfasst, zu dem/der die Route gesucht wird, oder an dem oder zu der eine mobile Einheit auf der Route fährt, wobei die Bestimmungseinheit (102) das aufzuzeichnende Fernsehprogramm auf der Basis der Informationen, die das Ziel betreffen, oder der Informationen, die die Route betreffen, und der Informationen, die von der Zeitinformationserfassungseinheit erfasst werden, bestimmt.

3. Fernsehprogrammaufzeichnungseinrichtung nach Anspruch 1, die weiterhin Folgendes umfasst:
eine Wetterinformationserfassungseinheit (105), die Informationen hinsichtlich des Wetters zu einer Zeit erfasst, wenn die Route gesucht wird oder wenn ein Fahrzeug auf der Route fährt, wobei die Bestimmungseinheit (102) das aufzuzeichnende Fernsehprogramm auf der Basis der Informationen, die das Ziel betreffen, oder der Informationen, die die Route betreffen, und der Informationen, die von der Wetterinformationserfassungseinheit erfasst werden, bestimmt.

4. Fernsehprogrammaufzeichnungseinrichtung nach Anspruch 1, wobei die Bestimmungseinheit (102) aus den Informationen, die das Ziel betreffen, oder den Informationen, die die Route betreffen, ein Schlüsselwort extrahiert und das aufzuzeichnende Fernsehprogramm auf der Basis des extrahierten Schlüsselworts bestimmt.

5. Fernsehprogrammaufzeichnungseinrichtung nach einem der Ansprüche 1 bis 4, die weiterhin Folgendes umfasst:
eine Detektierungseinheit (106), die eine Restleistung einer Batterie in der mobilen Einheit bestimmt, wobei die Aufzeichnungseinheit (103) das Fernsehprogramm auf der Basis der Restleistung der Batterie, die von der Detektierungseinheit detektiert wird, aufzeichnet.

6. Fernsehprogrammaufzeichnungsverfahren, das in einem Fahrzeug durchgeführt wird, **dadurch gekennzeichnet, dass** es die folgenden Schritte umfasst:
Empfangen und Speichern einer der Liste eines Elektronischen Programmführers (EPG);
Suchen einer von dem Fahrzeug zu einem gegebenen Ziel zu folgenden Route auf der Basis von Karteninformationen;
Bestimmen eines aufzuzeichnenden Fernsehprogramms auf der Basis von Informationen, die das Ziel betreffen, oder Informationen, die die Route betreffen, die bei der Routensucheinheit gesucht wird, und von in der Liste eines Elektronischen Programmführers (EPG) enthaltenen Informationen;
Empfangen von Fernsehsignalen, die das bestimmte Fernsehprogramm enthalten; und
Aufzeichnen des bestimmten Fernsehprogramms.

## Revendications

1. Dispositif d'enregistrement de programmes télévisés monté sur un véhicule, **caractérisé en ce qu'**il comprend :
une unité de recherche d'itinéraire (101) qui recherche un itinéraire à suivre par le véhicule jusqu'à une destination donnée basée sur des informations cartographiques ;
une mémoire adaptée pour stocker une liste d'un Guide de Programmes Électronique (EPG) ;
une unité de détermination (102) qui détermine un programme télévisé à enregistrer en se basant sur des informations transmises de l'unité de recherche d'itinéraire à l'unité de détermination, sur des informations concernant la destination ou concernant l'itinéraire qui est recherché par l'unité de recherche d'itinéraire et sur des informations contenues dans la liste du Guide de Programmes Électronique (EPG) stockée ;
un unité de communication (308) qui reçoit des signaux de télévision qui contiennent le programme télévisé déterminé ; et
une unité d'enregistrement (103) qui enregistre le programme télévisé déterminé.

2. Dispositif d'enregistrement de programmes télévisés selon la revendication 1, comprenant en outre :
une unité d'acquisition d'informations temporelles (104) qui saisit des informations concernant au moins l'une de la date et de l'heure à laquelle l'itinéraire est recherché ou à laquelle une unité mobile se déplace sur l'itinéraire, dans laquelle l'unité de détermination (102) détermine le programme télévisé à enregistrer en se basant sur les informations concernant la destination ou sur les informations concernant l'itinéraire et sur les informations qui sont saisies par l'unité d'acquisition d'informations temporelles.

3. Dispositif d'enregistrement de programmes télévisés selon la revendication 1, comprenant en outre :
une unité d'acquisition d'informations sur les conditions atmosphériques (105) qui saisit des informations concernant les conditions atmosphériques au moment où l'itinéraire est recherché ou lorsqu'un véhicule se déplace sur l'itinéraire, dans laquelle l'unité de détermination (102) détermine le programme télévisé à enregistrer en se basant sur les informations concernant la destination ou les informations concernant l'itinéraire et les informations qui sont saisies par l'unité d'acquisition d'informations sur les conditions atmosphériques.

4. Dispositif d'enregistrement de programmes télévisés selon la revendication 1, dans lequel l'unité de détermination (102) extrait un mot-clé des informations concernant la destination ou des informations concernant l'itinéraire et détermine le programme télévisé à enregistrer en se basant sur le mot-clé extrait.

5. Dispositif d'enregistrement de programmes télévisés selon l'une quelconque des revendications 1 à 4, comprenant en outre :
une unité de détection (106) qui détecte une puissance restante d'une batterie dans l'unité mobile, dans laquelle l'unité d'enregistrement (103) enregistre le programme télévisé en se basant sur la puissance restante de la batterie qui est détectée par l'unité de détection.

6. Procédé d'enregistrement de programmes télévisés fonctionnant dans un véhicule, **caractérisé en ce qu'**il comprend les étapes suivantes :
la réception et le stockage d'une liste du Guide de Programmes Électronique (EPG) ;
la recherche d'un itinéraire à suivre par le véhicule jusqu'à une destination donnée en se basant sur des informations cartographiques ;
la détermination d'un programme télévisé à enregistrer en se basant sur des informations concernant la destination ou sur des informations concernant l'itinéraire qui est recherché au moment de la recherche et sur des informations contenues dans la liste du Guide du Programme Électronique (EPG) ;
la réception de signaux de télévision contenant le programme télévisé déterminé ; et
l'enregistrement du programme télévisé.
